(19) Europäisches Patentamt
European Patent Office
Office européen des brevets

(11) EP 2 184 470 A2

(12) EUROPEAN PATENT APPLICATION

(43) Date of publication:
12.05.2010 Bulletin 2010/19

(51) Int Cl.:
F02D 41/06 (2006.01)     F02N 11/08 (2006.01)

(21) Application number: 09175391.3

(22) Date of filing: 09.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 10.11.2008 JP 2008288076

(71) Applicant: Toyota Jidosha Kabushiki Kaisha
Toyota-shi, Aichi 471-8571 (JP)

(72) Inventors:
• Yoshihara, Masatomo
Toyota-shi Aichi 471-8571 (JP)
• Nakamura, Yoshifumi
Toyota-shi Aichi 471-8571 (JP)

• Okamura, Koji
Toyota-shi Aichi 471-8571 (JP)
• Uchida, Akito
Toyota-shi Aichi 471-8571 (JP)
• Hatta, Yuuji
Toyota-shi Aichi 471-8571 (JP)
• Masuda, Satoshi
Kariya-shi Aichi 448-8661 (JP)

(74) Representative: Winter, Brandl, Fürniss, Hübner
Röss, Kaiser,
Polte Partnerschaft Patent- und
Rechtsanwaltskanzlei
Bavariaring 10
80336 München (DE)

(54) Controller of vehicle internal combustion engine

(57) A controller of a vehicle internal combustion engine that is automatically stopped and restarted under a prescribed condition related to operation of the vehicle is disclosed. The engine includes an output shaft, a starter constantly meshed with the output shaft, and a throttle valve regulating the intake air amount supplied to the engine. After the engine has been subjected to an automatic stopping procedure, the controller restarts the engine when a restarting condition is met, and the controller uses the starter to restart the engine if the engine speed is in such a predetermined range that autonomous operation of the engine cannot be restored. The controller predicts, as a predicted air amount, the amount of air drawn into the cylinder of the engine after the restarting condition is met. The controller reduces an engine start fuel injection amount, which is calculated when the starter is used, in correspondence with the predicted air amount.

Fig.1

## Description

FIELD OF THE INVENTION

The present invention relates to a controller of an internal combustion engine, and, more particularly, to a controller for controlling the fuel injection amount at restarting of an internal combustion engine that is automatically stopped and restarted under certain conditions.

BACKGROUND OF THE INVENTION

For example, Japanese Laid-Open Patent Publication No. 2005-36790 discloses a controller of an internal combustion engine having an economy running function. Through the economy running function, the engine is controlled in such a manner that operation of the engine is automatically stopped when a certain condition related to operation of the vehicle is met and restarted when the condition is no longer satisfied. More specifically, when conditions 1) to 3) described below, for example, are satisfied, the controller determines that an automatic stopping condition, which is a condition for automatically stopping the engine as the control target, is satisfied.

> 1) The vehicle having the internal combustion engine is temporarily stopped, for example, at a stop signal (in other words, the traveling speed of the vehicle drops to a level lower than or equal to a predetermined speed);
> 2) The depression amount of the accelerator pedal depressed by the driver is 0; and
> 3) The brake pedal is depressed by the driver.

When the automatic stopping condition is met, the fuel injection amount of the engine is set to 0, or in other words, fuel cutoff is carried out, to automatically stop the operation of the engine. Afterwards, on the condition that the depression amount of the accelerator pedal depressed by the driver is not 0 or the brake pedal is not depressed by the driver, the controller determines that a restarting condition of the engine is satisfied. The controller then actuates a generator-motor, which is an auxiliary device of the engine, to restart the operation of the engine. The controller described in the aforementioned publication decreases the fuel consumption related to the operation of the engine through the above-described series of control.

As disclosed in Japanese Laid-Open Patent Publication No. 2006-63913, a constant mesh type starter is often employed as a starter for starting an internal combustion engine. The starter includes a pinion gear provided on the output shaft of the starter and a ring gear that transmits the rotational force generated by the pinion gear to the crankshaft of the engine. The pinion gear and the ring gear are meshed with each other not only when the engine is restarted but constantly. Compared to a conventional starter that causes mesh between a pinion gear and a ring gear only when the engine is started, the constant mesh type starter shortens the time needed to start the engine. Accordingly, it is particularly effective to employ the constant mesh type starter to restart the engine described in Japanese Laid-Open Patent Publication No. 2005-36790, which is automatically stopped and restarted, since such restarting must be accomplished rapidly compared to normal engine restarting.

When an internal combustion engine is started using a starter, as described in, for example, Japanese Laid-Open Patent Publication No. 63-235633, starting performance of the engine is improved normally by increasing the fuel injection amount in accordance with current engine coolant temperature and intake air temperature, compared to the case of autonomous operation of the engine. Such increase of the fuel injection amount at the time when the engine is started may be carried out in the above-described internal combustion engine, which is automatically stopped and restarted. Specifically, in this engine, the fuel injection amount is raised not only when the engine is normally started by turning on the ignition switch but also when the engine is restarted after being automatically stopped. However, in the engine that is automatically stopped and restarted, the condition of the engine may vary depending on the length of the time that has elapsed from when the engine has been automatically stopped to when the engine is restarted or the speed of the engine, as will be explained below.

> (A) The engine is completely stopped, and a starter needs to be used to restart the engine.
> (B) The engine is not completely stopped, but the starter is necessary for restarting the engine since switching to autonomous engine operation is impossible.
> (C) The engine is not completely stopped, and switching to the autonomous engine operation is possible.

When the engine is in the condition (C), particulally, the engine is easily switched from an automatically stopped state to normal operation, and the engine is restarted (the vehicle is started) rapidly in response to a demand by the driver. When the engine is in the condition (A), the engine is completely stopped and thus maitained under substantially the same conditions as those of normal starting of the engine, which is brought about by turning on the ignition switch. Accordingly, the engine is restarted properly in a manner similar to the manner of the normal starting. When the engine is in the condition (B), the starter is employed to restart the engine. The fuel injection amount is thus increased in the same manner as the case of the condition (A) or the normal starting. However, since the engine is completely stopped when the engine is restarted in the condition (A) or by the normal starting, the pressure in the intake pipe is equal to the atmospheric level. Contrastingly, when the engine is restarted in the condition (B), negative pressure caused by operation of the engine remains in the intake pipe, thus limiting the amount of the air drawn into the cylinders. Accordingly, if the fuel injection amount is increased in this state as described above, the air-fuel mixture may become over-rich, deteriorating the ignitability of the air-fuel mixture. Prior to fuel injection, the pressure in the intake pipe may be adjusted to the atmospheric level by quickly opening the throttle valve, which regulates the intake air amount, to a great opening degree. However, if the throttle valve is quicly opened to a great opening degree when the internal combustion engine is not completely stopped, the engine speed may excessively rise when the engine is restarted, or in other words, engine rev-up may occur.

Accordingly, it is an objective of the present invention to provide a controller of a vehicle internal combustion engine that is automatically stopped and restarted, which improves the stability of combustion at restarting of the engine.

To achieve the foregoing objective and in accordance with one aspect of the present invention, a controller of a vehicle internal combustion engine that is automatically stopped and restarted under a prescribed condition related to operation of the vehicle is provided. The engine includes an output shaft and a starter constantly meshed with the output shaft. After the engine has been subjected to an automatic stopping procedure, the controller restarts the engine when a restarting condition is met. The controller uses the starter to restart the engine if an engine speed is in such a predetermined range that autonomous operation of the engine cannot be restored. The controller predicts an amount of air drawn into a cylinder of the engine after the restarting condition is met as a predicted air amount. On condition that the engine speed at the time when the restarting condition is met is not zero and is in the predetermined range, the controller reduces, in correspondence with the predicted air amount, an engine start fuel injection amount that is calculated when the starter is used.

Other aspects and advantages of the present invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a diagram schematically showing the configuration of an in-line four-cylinder internal combustion engine having an automatic transmission according to one embodiment of the present invention;

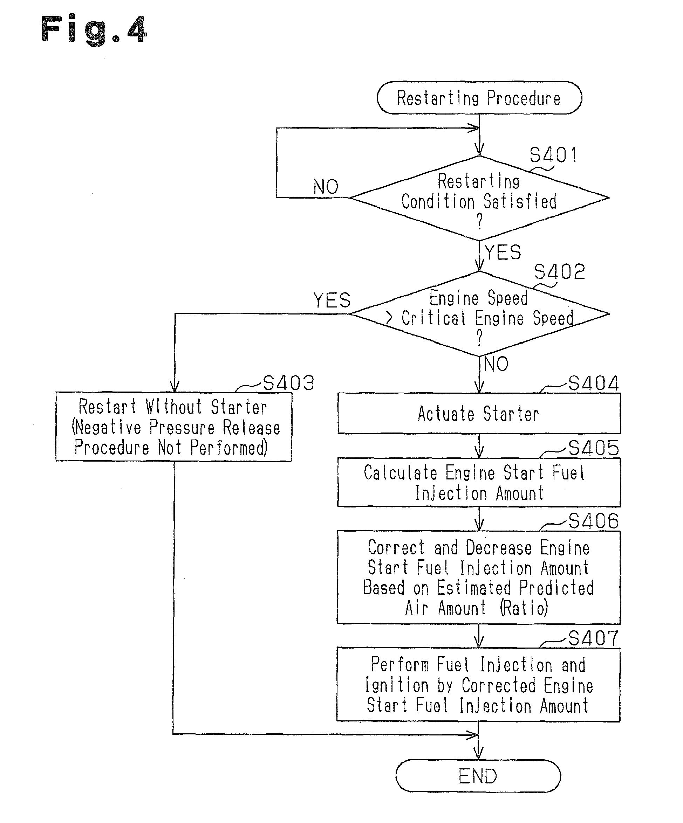

Fig. 2 is a cross-sectional view schematically showing the configuration of a portion of a constant mesh type starter mounted in the engine shown in Fig. 1;
Fig. 3 is a chart illustrating switching modes related to economy running performed by an electronic control unit of Fig. 1;
Fig. 4 is a flowchart representing a restarting procedure carried out by the electronic control unit of Fig. 1; and
Fg. 5 is a timing chart of the restarting procedure shown in Fig. 4, where section (a) shows changes of traveling modes in, section (b) shows actuation timings of the starter, section (c) shows changes of the engine speed, section (d) shows changes of a predicted air amount Qa, section (e) shows timings of reduction of an engine start fuel injection amount based on a predicted air amount ratio, and section (f) shows a fuel injection period.

DETAILED DESCRIPTION OF THE PREFERRED EMBODIMENTS

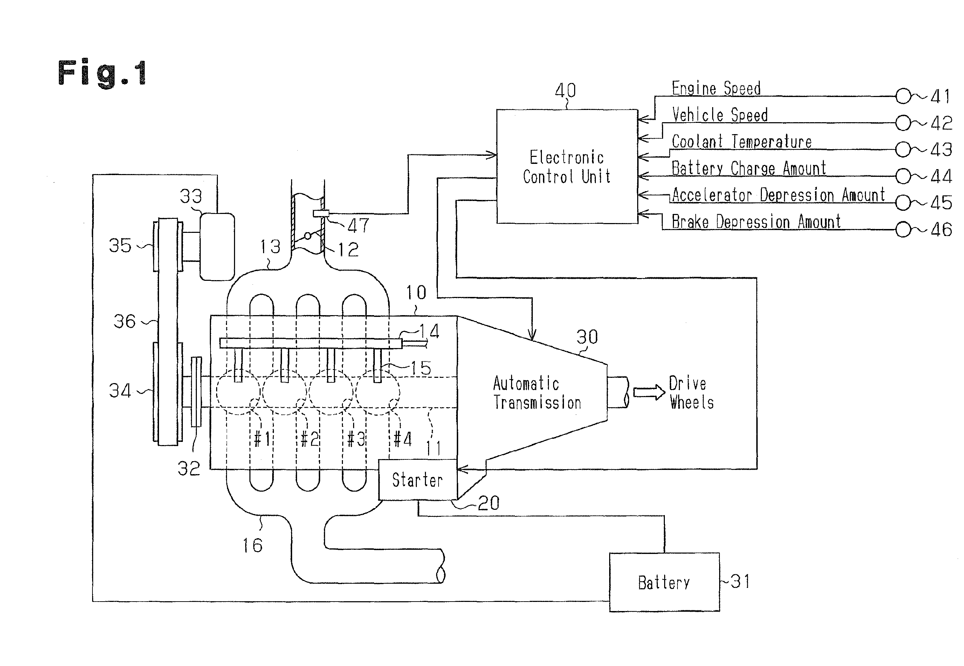

An embodiment of the present invention will now be described with reference to Figs. 1 to 5. An internal combustion engine 10 of the present embodiment is mounted in an automatic-transmission vehicle and is automatically stopped and restarted under certain conditions related to operation of the vehicle.

Fig. 1 shows the schematic configuration of the internal combustion engine 10, which is an in-line four cylinder engine arranged in the automatic transmission vehicle, and the vicinity of the engine 10. As illustrated in Fig. 1, an intake pipe 13 and an exhaust pipe 16 are each connected to four cylinders #1, #2, #3, #4, which are arranged in line in the engine 10. The intake pipe 13 supplies air to the cylinders #1, #2, #3, #4. The exhaust pipe 16 discharges exhaust gas, which is produced through combustion of air-fuel mixture in the cylinders #1, #2, #3, #4. The intake pipe 13 and the exhaust pipe 16 are each branched into four lines at the connecting portion with respect to the cylinders #1, #2, #3, #4. A throttle valve 12 regulating the amount of air drawn into the intake pipe 13 and an air flowmeter 47 measuring the amount of the drawn air are arranged in the intake pipe 13 at the positions upstream from the branching point of the intake pipe 13. A fuel supply pipe 14 is provided to conduct fuel, which is supplied from a fuel tank to the cylinders #1, #2, #3, #4 for combustion, to the cylinders #1, #2, #3, #4 under high pressure. Four fuel injections valves 15 through which the high-pressure fuel is injected directly into the cylinders #1, #2, #3, #4 are connected to the fuel supply pipe 14.

Each of the cylinders #1, #2, #3, #4 has a piston reciprocating in the corresponding cylinder #1, #2, #3, #4 when the air-fuel mixture, which is the air supplied through the intake pipe 13 and the fuel injected through the fuel injection valves 15, is burned. The pistons are connected to a single crankshaft 11 through a connecting rod converting reciprocation of the corresponding piston to rotation. A first end of the crankshaft 11 is connected to the drive wheels through an automatic transmission 30, which automatically changes the transmission ratio, or, in other words, the degree of speed reduction of the engine operation, in accordance with the operating state of the engine such as the traveling speed of the vehicle and the engine speed. A first pulley 34 is arranged at a second end of the crankshaft 11. A belt 36 is arranged around the first pulley 34 and a second pulley 35, which is provided at an end of an output shaft of a generator-motor 33. The generator-motor 33 generates power through rotation of the crankshaft 11 and charges the power in a battery 31. The generator-motor 33 functions also as a motor driving an auxiliary device such as an air conditioner (a compressor of the air conditioner, to be exact) when the rotation of the crankshaft 11 is stopped. An electromagnetic clutch 32, which selectively permits and prohibits operable connection between the crankshaft 11 and the generator-motor 33, is arranged at the joint portion between the crankshaft 11 and the first pulley 34.

When the engine 10 operates, air is supplied from the intake pipe 13 to the cylinders #1, #2, #3, #4 by the amount regulated by the throttle valve 12 in accordance with the operating state of the engine 10. The air-fuel mixture, which is the mixture of the supplied air and the fuel injected through the fuel injection valves 15, is then burned in the cylinders #1, #2, #3, #4. The exhaust gas, which is produced through such burning, is discharged through the exhaust pipe 16. When the air-fuel mixture is burned, the reciprocation of the piston in each cylinder #1, #2, #3, #4 is converted to rotation by the corresponding connecting rods, thus rotating the crankshaft 11. The rotation of the crankshaft 11 is transmitted to the generator-motor 33 through the first pulley 34 that is connected to the crankshaft 11 through the electromagnetic clutch 32. This causes the generator-motor 33 to generate power. When the engine 10 is stopped and the aforementioned auxiliary device such as the air conditioner (the compressor) is to be actuated, the crankshaft 11 and the first pulley 34 are disconnected from each other by the electromagnetic clutch 32. This causes the generator-motor 33 to function as the motor driving the auxiliary device.

The engine 10 also has a starter 20. If the ignition switch is turned on when operation of the engine 10 is in a stopped state, the starter 20 rotates the crankshaft 11 by the power supplied from the battery 31, thus promoting autonomous operation of the engine 10.

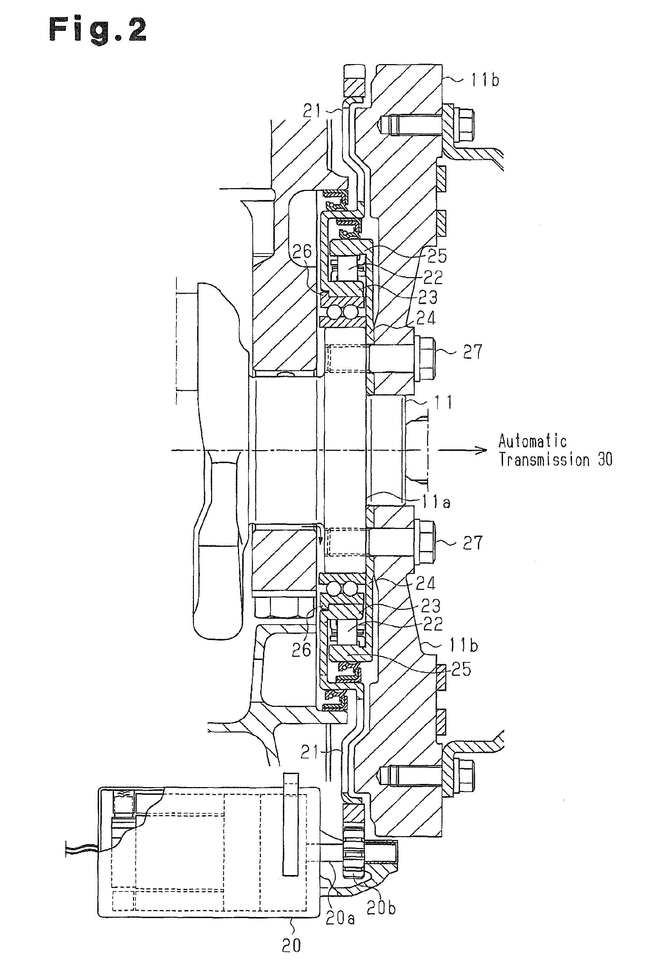

The configuration of the starter 20 and the configuration of a mechanism that transmits the rotational force of the starter 20 to the crankshaft 11 will hereafter be explained in detail with reference to Fig. 2.

As illustrated in Fig. 2, a large diameter portion 11a is formed at the first end of the crankshaft 11, which is connected to the automatic transmission 30. The large diameter portion 11a is press fitted into a ball bearing 26, which is a roller bearing. A disk-like ring gear 21 is arranged at a radially outside position of the ball bearing 26. The ring gear 21 has an inner race 23, which is arranged at a radially inner position of the ring gear 21. The inner race 23 is engaged with the outer circumference of the ball bearing 26. A disk-like outer race member 24 is arranged around the crankshaft 11. The outer race member 24 is opposed to the inner race 23 in a radial direction and has an outer race 25, which is arranged around the inner race 23. A one-way clutch 22, which permits transmission of the rotational force in one direction from the ring gear 21 to the outer race member 24 but prohibits transmission of the rotational force in the aforementioned direction from the outer race member 24 to the ring gear 21, is arranged between the inner race 23 and the outer race 25. The outer race member 24, together with a flywheel 11 b engaged with the first end of the crankshaft 11, is fastened to the large diameter portion 11 a by means of a bolt 27. The flywheel 11b suppresses uneven rotation of the crankshaft 11.

The teeth formed along the outer circumference of the ring gear 21 are constantly meshed with the teeth of a pinion gear 20b, which is arranged on an output shaft 20a of the starter 20.

When the ignition switch is turned on, the power is supplied from the battery 31 to the starter 20, thus actuating the starter 20. This rotates the pinion gear 20b, which is arranged on the output shaft 20a of the starter 20, and rotation of the pinion gear 20b is transmitted to the ring gear 21. Rotation of the ring gear 21 is then transmitted to the outer race member 24 through the one-way clutch 22, thus rotating the crankshaft 11 fastened to the outer race member 24.

Rotation of the crankshaft 11 causes autonomous operation of the engine 10. Afterwards, when the rotational speed of the crankshaft 11 becomes higher than the rotational speed of the starter 20, which is the rotational speed of the ring gear 21 rotating together with the starter 20, the rotational speed of the outer race member 24 rotating together with the crankshaft 11 becomes higher than the rotational speed of the ring gear 21. The one-way clutch 22 then disengages the ring gear 21 and the outer race member 24 from each other, thus preventing the rotational force of the crankshaft 11 from being transmitted to the starter 20 through the outer race member 24 and the ring gear 21. Accordingly, despite the fact that the pinion gear 20b and the ring gear 21 are constantly meshed with each other, the starter 20 and the ring gear 21 may be rotated only when necessary, such as when the engine 10 is started. Compared to a starter that needs to cause the pinion gear 20b to mesh with the ring gear 21 every time the starter 20 is actuated, the constant mesh type starter 20 does not consume the time for meshing the gears 20b, 21 with each other and thus reduces the time necessary for starting the engine 10.

With reference to Fig. 1, the engine 10 or the vehicle in which the engine 10 is mounted includes the following sensors as sensors detecting the operating state of the engine 10 or the vehicle.

(a) An engine speed sensor 41 that detects the speed of the engine 10, which is the rotational speed of the crankshaft 11;
(b) A vehicle speed sensor 42 that detects the traveling speed of the vehicle in which the engine 10 is mounted;
(c) A coolant temperature sensor 43 that detects the temperature of the engine coolant, which cools the engine 10;
(d) A battery current sensor 44 that detects the electric current flowing into and from the battery 31 in order to calculate the charge amount of the battery 31;
(e) An accelerator depression amount sensor 45 that detects the depression amount of an accelerator pedal arranged in the vehicle; and
(f) A brake pedal sensor 46 that detects the depression amount of a brake pedal arranged in the vehicle.

Detection signals of the sensors 41 to 46 and the air flowmeter 47 are input to an electronic control unit 40. The electronic control unit 40 is configured mainly by a microcomputer that has a central processing unit (CPU), a program memory (a ROM), and a data memory (a RAM) and performs various types of control including control of the automatic transmission 30, control of the fuel injection valves 15, and control of the starter 20. The electronic control unit 40 includes an input section and drivers as peripheral circuits of the microcomputer. The input section receives the detection signals from the above-described sensors. The drivers drive various types of actuators in response to commands from the microcomputer. The sensors are electrically connected to the input section of the electronic control unit 40. An actuator related to transmission ratio control of the automatic transmission 30, the fuel injection valves 15, and the starter 20 are each electrically connected to an output section of the electronic control unit 40.

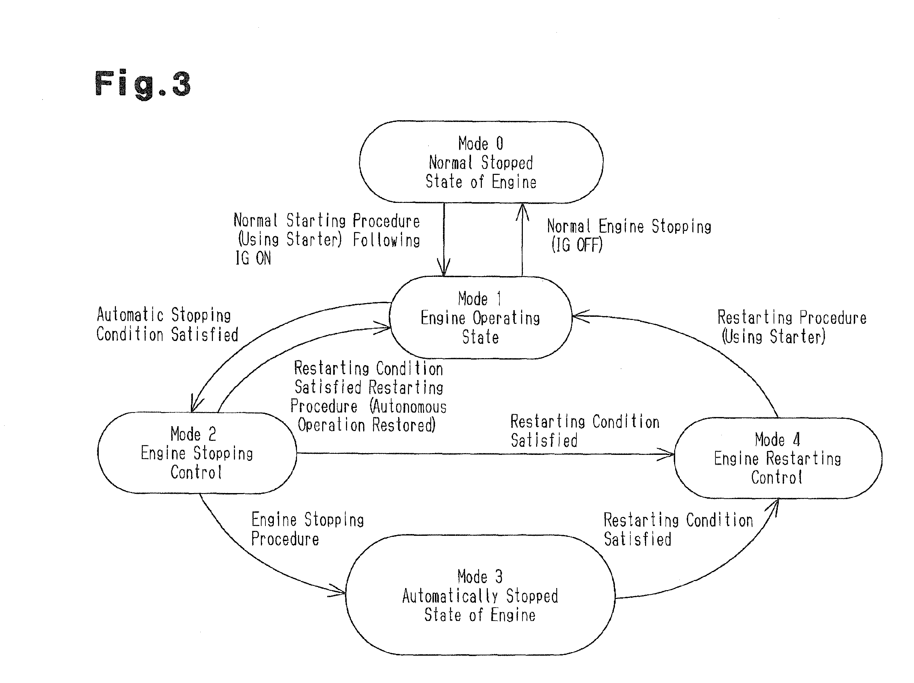

The electronic control unit 40 performs control related to economy running by which the engine 10 is automatically stopped and restarted in accordance with the operating state of the vehicle in which the engine 10 is mounted and operation of the vehicle. Details of the control related to the economy running will hereafter be explained with reference to Fig. 3.

As illustrated in Fig. 3, when the ignition switch (IG) of the vehicle that has been held in a stopped state is switched from the OFF position to the ON position by the driver, the electronic control unit 40 is activated. The electronic control unit 40 then sets the control mode related to the economy running to the mode indicating a normal stopped state of the engine operation, which is the mode 0. When the driver switches the ignition switch to the STA (start) position, the starter 20 is actuated and the crankshaft 11 is rotated, thus starting the engine 10. When starting of the engine 10 is completed and the engine 10 starts the autonomous operation, the electronic control unit 40 sets the control mode to the mode 1, which indicates an engine running state. In this state, in which the mode 1 is set, when the driver switch the ignition switch to the OFF" position, the electronic control unit 40 performs a normal engine stopping procedure to stop the engine 10 and changes the control mode to the mode 0. When the control mode is the mode 1, the electromagnetic clutch 32 (see Fig. 1) connects the crankshaft 11 to the generator-motor 33. This causes the generator-motor 33 to rotate together with the crankshaft 11 and thus generate the power. The generated power is charged in the battery 31.

If a condition for automatically stopping the engine 10 is satisfied due to temporary stop of the vehicle for, for example, a stop signal when the engine 10 is in the running state, or in other words, when the control mode is set to the mode 1, the electronic control unit 40 changes the control mode from the mode 1 to the mode 2.

The condition for automatically stopping the engine 10 may include the conditions described below:

(g) The depression amount of the accelerator pedal is 0;
(h) The traveling speed SP of the vehicle is lower than or equal to a predetermined speed Spa;
(i) The brake pedal is depressed;
(j) The engine coolant temperature TW is higher than or equal to a predetermined temperature TWa; and
(k) The charge amount VBAT of the battery 31 is greater than or equal to a predetermined value VBATa.

Particularly, in the present embodiment, the electronic control unit 40 determines that the condition for automatically stopping the engine 10 is satisfied when it is determined that the above-described conditions are all met with reference to the detection signals of the sensors 42, 43, 44, 45, 46. The threshold values SPa, TWa, and VBATa, by which it is determined whether the condition for automatically stopping the engine 10 is satisfied, are calculated in advance through experiments, for example, and stored in the program memory (the ROM) of the electronic control unit 40 (the microcomputer). The temperature TWa is set to the minimum value of such a range that combustion of the air-fuel ratio is not hampered when the engine 10 is restarted. The charge amount VBATa is set to the minimum value of such a range that the engine operation is allowed.

When the condition for automatically stopping the engine 10 is satisfied and the control mode is set to the mode 2, the electronic control unit 40 stops injection of the fuel into the cylinders #1, #2, #3, #4 through the fuel injection valves 15, thus stopping operation of the engine 10. Afterwards, when the engine 10 is completely stopped, or in other words, for example, when the detection signal of the engine speed sensor 41 indicates that the engine speed is 0, the electronic control unit 40 switches the control mode to the mode 3, which indicates an automatically stopped state of the engine operation. When the control mode is the mode 3, the crankshaft 11 and the generator-motor 33 are disengaged from each other by the electromagnetic clutch 32. This actuates the generator-motor 33 as the motor, so that the output of the motor actuates the auxiliary device such as the air conditioner (the compressor).

If a condition for restarting the engine 10 is satisfied when the control mode corresponds to the mode 3, the electronic control unit 40 changes the control mode from the mode 3 to the mode 4. The condition includes the conditions described below.

(I) The brake pedal is released;
(m) The depression amount of the accelerator pedal is not 0; and
(n) The charge amount VBAT of the battery 31 drops to a value smaller than the predetermined value VBATa.

In the present embodiment, when the electronic control unit 40 determines that any one of the above-described conditions is met from the detection signals of the sensors 44, 45, 46, the electronic control unit 40 determines that the condition for restarting the engine 10 is satisfied.

When the control mode is set to the mode 4, the constant mesh type starter 20 is actuated and the crankshaft 11 is rotated to restart the engine 10. The crankshaft 11 and the generator-motor 33 are then reconnected to each other by the electromagnetic clutch 32, thus allowing the generator-motor 33 to function as the power generator. Afterwards, when the engine 10 is restarted by the starter 20 and resumes the autonomous operation, the electronic control unit 40 sets the control mode to the mode 1.

As has been described, the electronic control unit 40 of the present embodiment is capable of reducing the fuel consumption of the engine 10 by automatically stopping and restarting the engine operation in accordance with the operating state of the engine 10 or the vehicle or the traveling state of the vehicle.

If the above-described condition for restarting the engine 10 is satisfied before a necessary length of time for completely stopping the engine 10 elapses when the control mode is the mode 2, the control mode is switched from the mode 2 to the mode 4, which is the mode for restarting the engine 10, without being set to the mode 3, before stopping of the engine 10 is completed. At this stage, if the speed of the engine 10 is in such a range that the engine 10 can restore the autonomous operation, or in other words, if the engine operation is restartable without employing the starter 20, the normal operation of the engine 10 is resumed by performing fuel injection or ignition in accordance with the operating state of the engine 10. In this case, the control mode is set to the mode 1. Contrastingly, if the speed of the engine 10 is in such a range that the engine 10 cannot restore the autonomous operation, or in other words, if the starter 20 must be employed to restart the engine 10, the engine 10 is started in the same manner as the normal engine starting.

However, although the engine operation is completely stopped when the normal engine starting is performed or when the engine 10 is restarted in accordance with the mode 4, the engine operation is not stopped when the control mode is switched from the mode 2 to the mode 4. Accordingly, when the engine 10 is restarted after the control mode has been switched in this manner, negative pressure remains in the intake pipe 13 in accordance with the engine speed at the time when the control mode was switched. In other words, compared to the case in which the engine operation is completely stopped, the amount of the air drawn into the cylinders is restricted by the amount corresponding to the negative pressure remaining in the intake pipe 13 when the engine operation is not stopped. However, when the engine 10 is restarted by the starter 20, the fuel is injected into the cylinders #1, #2, #3, #4 through the fuel injection valves 15 by the amount corresponding to an engine start fuel injection amount, which is set in advance in accordance with the temperature of the engine coolant. Accordingly, if the engine 10 is restarted using the starter 20 when the engine operation is not completely stopped, the fuel injection amount becomes excessively great with respect to the intake air amount. This may deteriorate the ignitability of the air-fuel mixture.

To solve this problem, by performing a restarting procedure of the engine 10 after the engine 10 has been automatically stopped, the electronic control unit 40 of the present embodiment improves the restarting performance of the engine 10 when the engine operation is not completely stopped and the starter 20 is employed to restart the engine 10.

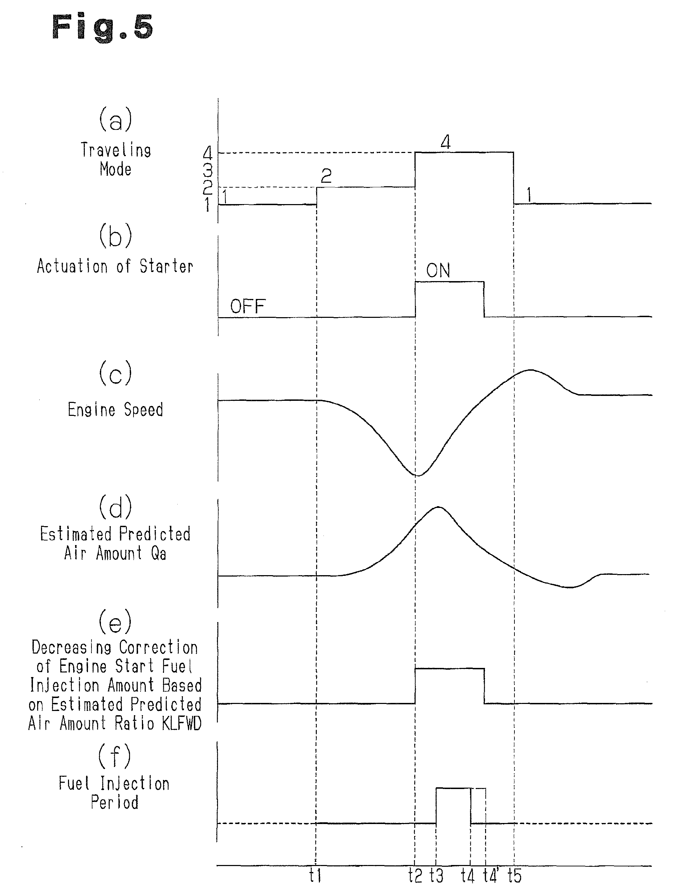

The restarting procedure performed by the electronic control unit 40 will hereafter be described in detail with reference to Figs. 4 and 5.

Fig. 4 is a flowchart representing the restarting procedure of the engine 10, which is carried out by the electronic control unit 40. The restarting procedure is performed when the condition for restarting the engine 10 is satisfied and the engine operation is not completely stopped, after the condition for automatically stopping the engine 10 has been met.

With reference to Fig. 4, in the restarting procedure, it is first determined whether the condition for restarting the engine 10 is satisfied when the condition for automatically stopping the engine 10 is met (step S401). Determination that the condition for restarting the engine 10 is satisfied is brought about if any one of the three above-described conditions (I) to (n) is met.

When it is determined that the condition for restarting the engine 10 is satisfied (step S401: YES), the electronic control unit 40 calculates the engine speed based on the detection signal output by the engine speed sensor 41. The electronic control unit 40 also determines whether the current engine speed is greater than a critical engine speed (which is, for example, 400 rpm), which is an engine speed slightly lower than the idle engine speed (which is, for example, 600 to 800 rpm) (step S402). When the engine speed is greater than the critical engine speed (step S402: YES), the electronic control unit 40 determines that the engine speed is in such a range that the engine 10 can restore the autonomous operation and restarts the engine 10 without employing the starter 20 (step S403). In other words, the electronic control unit 40 calculates the fuel injection amount, the fuel injection timing, and the ignition timing in accordance with the depression amount of the accelerator pedal to start the engine operation, in the same manner as the normal engine starting.

Contrastingly, when it is determined that the engine speed is smaller than or equal to the critical engine speed (NO: step S402), the starter 20 is actuated and restarting of the engine is initiated (step S404). The engine start fuel injection amount is then calculated based on the engine operating state at the time when the starter 20 is actuated (step S405). The engine start fuel injection amount is calculated in advance based on experiments or the like and stored in the program memory (the ROM) of the electronic control unit 40 as, for example, a map setting the fuel injection amount for respective values of the engine coolant temperature TW.

Subsequently, a latest predicted air amount ratio KLFWD is read out from the data memory (the RAM) of the electronic control unit 40. By multiplying the engine start fuel injection amount, which has been obtained in step S405, by the predicted air amount ratio KLFWD, the engine start fuel injection amount is reduced (step S406). The predicted air amount ratio KLFWD is the ratio of the predicted air amount Qa relative to the maximum value of the amount of air drawn into the cylinders #1, #2, #3, #4. The predicted air amount Qa is a predicted value of the amount of air drawn into the cylinders #1, #2, #3, #4 that is obtained by taking into consideration a lag between when the amount of intake air is detected by the air flowmeter 47 and when the intake air actually reaches the cylinders #1, #2, #3, #4. Specifically, the intake system from the air flowmeter 47 to the cylinders #1, #2, #3, #4 is assumed to be a first-order delay system. In other words, the predicted air amount Qa is determined by reflecting, in the actual air amount, the time (lag) needed for the intake air to reach the cylinders #1, #2, #3, #4 via the intake ports after passing the air flowmeter 47. The predicted air amount Qa is calculated by the electronic control unit 40 at predetermined cycles. Each time the predicted air amount Qa is obtained, the data memory (the RAM) is updated to store the latest predicted air amount Qa. If the predicted air amount from the previous calculation cycle is represented by Qb, the amount of the air measured by the air flowmeter 47, which is the actual air amount, is represented by Qs, and a first-order delay constant of the intake system from the air flowmeter 47 to the cylinders #1, #2, #3, #4 is represented by T, the latest predicted air amount Qa is represented by the expression (A) below

$$Qa = Qb + (Qs - Qb)/\tau$$

Using the predicted air amount Qa calculated by the expression (A), the predicted air amount ratio KLFWD is determined. Based on the predicted air amount ratio KLFWD, the engine start fuel injection amount that has been calculated in step S405 is reduced (step S406). Fuel injection and ignition of air-fuel mixture are carried out at respective predetermined timings based on the reduced fuel injection amount (step S407).

In the restarting procedure, the engine start fuel injection amount is reduced based on the predicted air amount ratio KLFWD. This suppresses over-rich air-fuel mixture at restarting of the engine, thus ensuring stable combustion of the air-fuel mixture in the cylinders #1, #2, #3, #4 when the engine is restarted. The predicted air amount Qa, using which the predicted air amount ratio KLFWD is determined, is obtained by taking into consideration the lag between when the amount of air is measured by the air flowmeter 47 and when the air reaches the cylinders #1, #2, #3, #4. This ensures accurate correction of the engine start fuel injection amount compared to a case in which the engine start fuel injection amount is reduced simply based on the actual air amount.

Fig. 5 is a timing chart representing an operating example of the restarting procedure illustrated in Fig. 4. Specifically, section (a) shows changes of traveling modes, section (b) shows actuation timings of the starter 20, section (c) shows changes of the engine speed, section (d) shows changes of the predicted air amount Qa, section (e) shows timings of decreasing correction of the engine start fuel injection amount based on the predicted air amount ratio KLFWD, and section (f) shows a fuel injection period.

With reference to Fig. 5, if the condition for automatically stopping the engine 10 is satisfied at the time point t1 when the vehicle is moving, the electronic control unit 40 switches the control mode from mode 1 to mode 2, thus adjusting the fuel injection amount to 0. The engine speed then gradually drops toward a stopped state until the condition for restarting the engine 10 is met at the time point t2. When the restarting condition is satisfied and the engine speed is lower than or equal to the critical engine speed (400 rpm) at the time point t2, the starter 20 is actuated as described above. After the time point t2, at which the engine restarting condition is met, the predicted air amount ratio KLFWD is calculated from the predicted air amount Qa obtained by the above-described expression (A). The engine start fuel injection amount is reduced based on the predicted air amount ratio KLFWD. In correspondence with the fuel injection amount calculated periodically since the time point t2, fuel injection is performed, for example, in the period from the time point t3 to the time point t4. When the autonomous operation of the engine 10 is brought about by the operation of the starter 20 and engine start fuel injection, the starter 20 is de-actuated and the control mode is switched from the mode 4 to the mode 1 at the time point t5.

In section (f) of Fig. 5, the double-dotted chain line represents one example of reference fuel injection period, in which, even though negative pressure remains in the intake pipe 13 when the engine 10 is being automatically stopped, the fuel injection is performed without correcting the engine start fuel injection amount to a smaller value. In this case, as described above, the air-fuel mixture becomes over-rich and thus hampers ignitability of the air-fuel mixture. However, as described above, in the illustrated embodiment, when the restarting condition is satisfied before operation of the engine 10 is stopped, and the engine 10 is restarted using the starter 20, the engine start fuel injection amount is reduced using the current predicted air amount Qa, which is the predicted air amount ratio KLFWD. This prevents the ignitability of the air-fuel mixture from being hampered.

The control unit 40 of the engine 10 according to the present invention has the advantages described below.

(1) When the engine 10, which has been automatically stopped, is restarted using the starter 20, the amount (the engine start fuel injection amount) of the fuel injected into the cylinders #1, #2, #3, #4 at restarting of the engine 10 is reduced in correspondence with the predicted air amount Qa obtained after the restarting condition was satisfied. Accordingly, even when the negative pressure remains in the intake pipe 13 of the engine 10 due to the engine rotation that has occurred in the procedure for automatically stopping the engine 10, thus causing the intake air amount at the time when the engine 10 is restarted to become less than the intake air amount at the time when the engine 10 is completely stopped, the engine start fuel injection amount is reduced in correspondence with the extent of decrease of the intake air amount. In other words, the cylinders #1, #2, #3, #4 are prevented from receiving an excessive amount of fuel. This prevents the air-fuel mixture in the cylinders #1, #2, #3, #4 from becoming over-rich, thus maintaining the ignitability of the air-fuel mixture. In this manner, more stable combustion of the air-fuel mixture in the cylinders #1, #2, #3, #4 is ensured when the engine 10 is restarted.

(2) The engine start fuel injection amount is reduced by multiplying the engine start fuel injection amount by the ratio (the predicted air amount ratio KLFWD) of the predicted air amount Qa relative to the maximum value of the amount of the air drawn into the cylinders #1, #2, #3, #4. The fuel injection amount at the time when the engine 10 is restarted is thus easily calculated. Also, the extent of decrease of the intake air amount at restarting of the engine 10 is reliably reflected in the extent of decrease of the fuel injection amount.

(3) The predicted air amount Qa is calculated taking into consideration the lag between when the air amount Qs is measured by the air flowmeter 47 and when the air amount Qs reaches the cylinders #1, #2, #3, #4. In this manner, the engine start fuel injection amount is corrected accurately compared to a case in which the engine start fuel injection amount is reduced be directly using the intake air amount Qs measured by the air flowmeter 47.

(4) The amount of the air drawn into the cylinders #1, #2, #3, #4 is predicted using the intake air amount Qs measured by the air flowmeter 47 and the predicted air amount Qb obtained in the previous calculation cycle. The predicted air amount Qa is thus easily determined and the lag of the flow of intake air is reliably reflected in the predicted air amount Qa.

(5) The upper limit of the engine speed range in which the engine 10 cannot restore the autonomous operation is set an engine speed slightly lower than the idle speed of the engine, that is, to 400 rpm. This suppresses excessive increase of the engine speed when the engine 10 is restarted using the starter 20 or after the engine 10 is restarted due to a great engine speed at the time when the starter 20 is actuated. Further, engine stall is avoided when autonomous engine operation is restored despite a low engine speed at restarting of the engine 10.

The present invention is not restricted to the configuration illustrated in the above-described embodiment but may be embodied in modified forms, for example, as described below.

The conditions for automatically stopping and restarting the engine 10 are not restricted to those illustrated in the above embodiment. These conditions may be modified in any suitable manners as long as the conditions ensure determination, for example, whether the vehicle is temporarily stopped or whether the vehicle is to be restarted after having been in a temporarily stopped state.

The configuration of the one-way clutch 22 is not restricted to that of the above illustrated embodiment. Specifically, the one-way clutch 22 may be configured in any suitable manners as long as the starter 20 is a constant mesh type and the one-way clutch 22 permits transmission of rotation from the starter 20 to the crankshaft 11 but prohibits transmission of rotation from the crankshaft 11 to the starter 20.

The internal combustion engine 10, which is the control target, is a direct injection type engine in which the fuel is injected directly into the cylinders #1, #2, #3, #4. However, the engine 10 is not restricted to this type but may be a port injection type internal combustion engine having a fuel injection valve arranged in an intake pipe 13. Alternatively, the cylinders of the internal combustion engine in which the present invention is employed may be arranged in any suitable manner other than the in-line four-cylinder arrangement.

The vehicle in which the electronic control unit 40 of the engine 10 is mounted is not restricted to an automatic transmission vehicle but may be a manual transmission vehicle, or an MT vehicle. In this case, one of the conditions for automatically stopping or restarting the engine 10 may be that the clutch pedal, not the brake pedal as in the case of the AT vehicle, is released or depressed.

The aforementioned critical engine speed is not restricted to 400 rpm. The critical engine speed may be set to any suitable value as long as the value is in the range of the engine speed in which the engine 10 cannot be restarted without using the starter 20 and less than the idle speed of the engine 10, which is the control target.

As long as the predicted air amount is calculated as a first-order delay system, the predicted air amount may be determined using an expression other than the expression (A) described above. Alternatively, the predicted air amount may be obtained using parameters other than the parameters used in the expression (A).

The first-order delay system does not necessarily used. That is, for example, the state of the intake system may be modeled in accordance with a parameter such as the engine speed of each internal combustion engine subjected to control. Based on such a modeled state, the predicted air amount Qa and the predicted air amount ratio KLFWD may be obtained.

**Claims**

1. A controller (40) of a vehicle internal combustion engine (10) that is automatically stopped and restarted under a prescribed condition related to operation of the vehicle, the engine (10) including an output shaft (20a) and a starter (20) constantly meshed with the output shaft (20a), wherein, after the engine (10) has been subjected to an automatic stopping procedure, the controller (40) restarts the engine (10) when a restarting condition is met, and wherein the controller (40) uses the starter (20) to restart the engine (10) if an engine speed is in such a predetermined range that autonomous operation of the engine (10) cannot be restored, the controller being **characterized in that** the controller (40) predicts an amount of air drawn into a cylinder (#1,#2,#3,#4) of the engine (10) after the restarting condition is met as a predicted air amount, and wherein, on condition that the engine speed at the time when the restarting condition is met is not zero and is in the predetermined range, the controller (40) reduces, in correspondence with the predicted air amount, an engine start fuel injection amount that is calculated when the starter is used.

2. The controller according to claim 1, the controller being **characterized** the controller (40) obtains, as a predicted air amount ratio (KLFWD), a ratio of the predicted air amount relative to a maximum value of the amount of air drawn into the cylinder (#1,#2,#3,#4), and reduces the engine start fuel injection amount by multiplying the engine start fuel injection amount by the predicted air amount ratio (KLFWD).

3. The controller according to claim 2, the controller being **characterized** the engine includes an air flowmeter (47) that detects an intake air amount, and wherein the controller (40) calculates the predicted air amount by taking into consideration a lag between when an amount of intake air is measured by the air flowmeter (47) and when the intake air reaches the cylinder (#1,#2,#3,#4).

4. The controller according to claim 3, the controller being **characterized** the controller calculates the predicted air amount at predetermined cycles, and wherein the controller (40) determines the predicted air amount Qa using the following expression:

$$Qa = Qb + (Qs - Qb)/\tau ,$$

in which Qa represents the predicted air amount to be determined in the current calculation cycle, Qb represents the predicted air amount that has been obtained in the previous calculation cycle, Qs represents the intake air amount measured by the air flowmeter (40), and $\tau$ represents a first-order delay constant of an intake system from the air flowmeter (40) to the cylinder.

5. The controller according to any one of claims 1 to 4, the controller being **characterized** an upper limit engine speed of the predetermined range is set to a value smaller than an idle speed of the engine (10).

# Fig.1

Engine Speed — O~41

Vehicle Speed — O~42

Coolant Temperature — O~43

Battery Charge Amount — O~44

Accelerator Depression Amount — O~45

Brake Depression Amount — O~46

40

Electronic Control Unit

33 · 35 · 36 · 34 · 32 · 13 · 12 · 47 · 14 · 15 · 10 · 16

#1 #2 #3 #4 · 11

Starter · 20

Automatic Transmission · 30

Drive Wheels

Battery ~31

EP 2 184 470 A2

# Fig.2

Automatic
Transmission 30

11

# Fig.3

Mode 0
Normal Stopped
State of Engine

Normal Starting Procedure
(Using Starter) Following
IG ON

Normal Engine Stopping
(IG OFF)

Mode 1
Engine Operating
State

Automatic Stopping
Condition Satisfied

Restarting Procedure
(Using Starter)

Restarting Condition
Satisfied Restarting
Procedure (Autonomous
Operation Restored)

Restarting Condition
Satisfied

Mode 2
Engine Stopping
Control

Mode 4
Engine Restarting
Control

Engine Stopping
Procedure

Restarting Condition
Satisfied

Mode 3
Automatically Stopped
State of Engine

EP 2 184 470 A2

# Fig.4

```
                            ( Restarting Procedure )
                                       │
              ┌───────────────────────▼───────── S401
              │            ◇ Restarting
        NO    └───────────< Condition Satisfied >
                            ◇        ?
                                     │YES
                                     │        S402
                            ◇ Engine Speed
        YES ────────────────< > Critical Engine Speed >
                            ◇        ?
                                     │NO
                                     ▼
                            ┌──────────────────┐ S404
                            │  Actuate Starter  │
                            └──────────────────┘
                                     │        S405
                            ┌──────────────────────┐
                            │ Calculate Engine Start │
                            │  Fuel Injection Amount │
                            └──────────────────────┘
```

┌─────────────────────────┐         │        S406
│  Restart Without Starter │  S403   ┌──────────────────────────┐
│ (Negative Pressure Release│        │ Correct and Decrease Engine│
│  Procedure Not Performed) │        │ Start Fuel Injection Amount│
└─────────────────────────┘         │ Based on Estimated Predicted│
                                     │   Air Amount (Ratio)      │
                                     └──────────────────────────┘
                                              │        S407
                                     ┌──────────────────────────┐
                                     │ Perform Fuel Injection and │
                                     │ Ignition by Corrected Engine│
                                     │  Start Fuel Injection Amount│
                                     └──────────────────────────┘

                                    ( END )

13

# Fig.5

(a)
Traveling Mode

(b)
Actuation of Starter

(c)
Engine Speed

(d)
Estimated Predicted Air Amount Qa

(e)
Decreasing Correction of Engine Start Fuel Injection Amount Based on Estimated Predicted Air Amount Ratio KLFWD

(f)
Fuel Injection Period

## REFERENCES CITED IN THE DESCRIPTION

**Patent documents cited in the description**

- JP 2005036790 A
- JP 2006063913 A
- JP 63235633 A